## Europäisches Patentamt

## European Patent Office

## Office européen des brevets

(19)

(11) Veröffentlichungsnummer: **0 175 048**
**A2**

(12) ## EUROPÄISCHE PATENTANMELDUNG

(21) Anmeldenummer: **85102569.2**

(22) Anmeldetag: **07.03.85**

(51) Int. Cl.⁴: **H 01 S 3/03**

(30) Priorität: **19.09.84 DE 3434373**

(43) Veröffentlichungstag der Anmeldung: **26.03.86**
**Patentblatt 86/13**

(84) Benannte Vertragsstaaten: **AT CH DE FR GB LI**

(71) Anmelder: **W.C. Heraeus GmbH, Heraeusstrasse 12 - 14,
D-6450 Hanau / Main (DE)**

(72) Erfinder: **Opower, Hans, Dr., Sperberweg 13,
D-8033 Krailling (DE)**

(74) Vertreter: **Heinen, Gerhard, Dr., W.C. Heraeus GmbH
Zentralbereich Patente und Lizenzen
Heraeusstrasse 12-14, D-6450 Hanau (DE)**

(54) **Gaslaser, insbesondere CO2-Laser.**

(57) Es sind Gaslaser, insbesondere $CO_2$-Laser, bekannt mit einem Entladungsraum, der von einem laseraktiven Gas mit hoher Geschwindigkeit durchströmt wird, wobei die zur Anregung dienende Gasentladung als Gleichfeldentladung zwischen einer in Strömungsrichtung (5) ausgedehnten Anode (4) und einer der Anode gegenüberliegenden Kathode (3) brennt. Um einen Gaslaser zu schaffen, dessen Wirkungsgrad wesentlich durch weitgehende Unterdrückung der üblicherweise auftretenden Instabilitäten erhöht wird, weist die Kathode (3) eine auf ihrer zur Anode (4) hin gerichteten Seite in Strömungsrichtung (5) des laseraktiven Gases umlaufende Oberfläche auf.

Hanau, den 18. Sept. 1984
ZPL-eG/W

W. C. Heraeus GmbH, Hanau

Patent- und Gebrauchsmusterhilfsanmeldung

"Gaslaser, insbesondere $CO_2$-Laser"

_ 1 _

Die vorliegende Erfindung betrifft einen Gaslaser, insbesondere
einen $CO_2$-Laser, mit einem Entladungsraum, der von einem
laseraktiven Gas mit hoher Geschwindigkeit durchströmt wird,
wobei die zur Anregung dienende Gasentladung als Gleichfeldentladung zwischen einer in Strömungsrichtung ausgedehnten
Anode und einer der Anode gegenüberliegenden Kathode brennt.
Derartige Gaslaser sind allgemein bekannt.

Insbesondere für $CO_2$-Hochleistungslaser wird vorzugsweise
eine Anordnung gewählt, bei der das laseraktive Gas transversal
über eine kurze Wegstrecke durch einen Anregungsraum getrieben
wird, in dem zwischen zwei Elektroden eine Gasentladung brennt.
Das elektrische Feld der Gasentladung und die Strömungsrichtung
des Gases stehen aufeinander senkrecht. Die optische Achse
des Laserresonators erstreckt sich hierbei in einem rechten
Winkel zum elektrischen Feld und zur Gasströmung.

Diese Anordnung hat den Vorteil, daß das aktive Gas jeweils
nur eine sehr geringe Verweilzeit im Bereich der Gasentladung
besitzt und deshalb eine hohe elektrische Leistung aufnehmen
kann, ohne daß dabei die Temperatur die noch zulässigen Werte
überschreitet. Zur Aufrechterhaltung der Entladung wird ein
elektrisches Gleichfeld mit einer nur mäßig hohen Versorgungsspannung (ca. 2000 V) benötigt.

0175048

In den praktischen Ausführungen hat sich gezeigt, daß die
theoretisch mögliche Energiebeaufschlagung, insbesondere
bei höheren Gasdichten, meist nicht erreicht wird. Dies ist
die Folge von auftretenden Instabilitäten, die durch die
Bildung negativer Ionen zum Verlust von Elektronen und auch
zur Entstehung von Bogenentladungen führen. Um diese schädlichen Instabilitäten zu unterdrücken, wird versucht, das
Lasergas rein von Verunreinigungen zu halten. Darüber hinaus
werden vielfach elektrische Maßnahmen ergriffen, die die
verstärkte Erzeugung von Elektronen zum Ziele haben. Hierzu
zählen spezielle elektrische Beschaltungen der Kathode oder
zusätzliche Hilfsentladungen auf der Grundlage von Funken-
oder Koronaentladungen. Diese bekannten Hilfsentladungen
haben den Nachteil, daß sie Hochspannungsschaltkreise mit
Kilowatt-Leistungen erforderlich machen und darüber hinaus
Bauteile benötigen, die einem starken Verschleiß unterworfen
sind.

Der vorliegenden Erfindung liegt nun die Aufgabe zugrunde,
einen Gaslaser, insbesondere $CO_2$-Laser, zu schaffen, dessen
Wirkungsgrad wesentlich durch weitgehendste Unterdrückung
der üblicherweise auftretenden Instabilitäten erhöht wird.

Diese Aufgabe wird erfindungsgemäß dadurch gelöst, daß die
Kathode eine umlaufende Oberfläche besitzt, wobei der der
Anode zugekehrte Teil dieser Oberfläche eine Bewegungskomponente
in Strömungsrichtung des laseraktiven Gases aufweist. Gemäß
der vorliegenden Erfindung werden zur Unterdrückung der Instabilitäten völlig andere Wege eingeschlagen als bisher,
wobei folgende Gesichtspunkte maßgebend sind:

Es hat sich herausgestellt, daß die Instabilitäten ihren
Ursprung vorwiegend im kathodennahen Bereich der Gasentladung
haben. Durch die erfindungsgemäße Ausbildung der Kathode
mit der in Strömungsrichtung des laseraktiven Gases umlaufenden
Oberfläche wird eine wirbelfreie Durchströmung des Entladungsraumes und insbesondere eine wirbelfreie Umströmung der Kathode

erreicht. Eine Ablösung der Strömungsgrenzschicht an der
Kathoden-Oberfläche und eine damit verbundene Wirbelbildung
tritt nicht auf.

Besonders vorteilhaft ist es, wenn die Geschwindigkeit, mit
der die Oberfläche der Kathode umläuft, der Geschwindigkeit
der Gasströmung im Kathodenbereich angenähert ist, d. h.,
wenn die Relativgeschwindigkeit zwischen dem strömenden Gas
und dem Kathodenkörper gegen Null geht. Völlige Vermeidung
einer Ablösung der Strömungsschicht an der Kathode wird auch
dann erreicht, wenn die Oberflächengeschwindigkeit der Kathode,
d. h. beispielsweise die Tangentialgeschwindigkeit einer
zylinderförmigen Kathode, in Strömungsrichtung größer als
die Geschwindigkeit der Gasströmung im kathodennahen Bereich
ist.

Bevorzugt wird zum Antrieb der umlaufenden Kathoden-Oberfläche
eine bereits in der Laseranordnung ohnehin vorhandene Einrichtung, die zur Erzeugung der Gasströmung dient, eingesetzt.
Ein gesonderter Antrieb für die Kathode bzw. deren Oberfläche
kann auch dann entfallen, wenn zum Antrieb das durch den
Laser-Anregungsraum zu leitende Gas, beispielsweise das Lasergas
oder ein Puffergas, eingesetzt wird. Dieses Gas wird in einer
solchen bevorzugten Ausführungsform zunächst über ein schaufelförmiges Antriebsrad, das auf einer verlängert ausgebildeten
Drehachse der Kathode aufgesetzt ist, zwangsgeführt, bevor
es in den Laser-Anregungsraum eingeleitet wird.

Bei einer als Hohlkörper ausgebildeten Kathode, durch den
ein Kühlmedium strömt, ist von Vorteil, über das Kühlmedium
gleichzeitig die Oberfläche der Kathode anzutreiben. Eine
konstruktiv besonders einfache Ausführung ergibt sich durch
eine aus einem äußeren, drehbar gelagerten die umlaufende
Kathoden-Oberfläche bildenden Zylindermantel und einem inneren,

feststehenden Zylinder. Zylindermantel und Zylinder weisen
hierbei einen solchen Durchmesser auf, daß zwischen ihnen
ein Ringspalt gebildet wird, wobei der Zylindermantel in
den Ringspalt ragende Anströmflächen aufweist, die axial
angeströmt den Zylindermantel in Rotation versetzen. Selbstverständlich kann durch diesen Ringspalt auch ein Kühlmedium,
das gleichzeitig den Zylindermantel kühlt, zwangsgeführt
werden. Bei einer solchen Anordnung ist weiterhin von Vorteil,
daß lediglich mit dem Zylindermantel nur eine geringe Masse
bewegt werden muß.

Bevorzugt wird die drehbar gelagerte Kathode in die den Laser-
Anregungsraum begrenzende Wand derart integriert eingebaut,
daß sie geringfügig über die Wand in den Laser-Anregungsraum
vorsteht. Hierdurch wird erreicht, daß die Kathode im Anregungsraum nur einen geringen Strömungswiderstand für die Gasströmung
bildet. Als vorteilhaft hat sich ein Kathodendurchmesser
von etwa 30 bis 60 mm, bevorzugt von etwa 50 mm, erwiesen.
Eine derart dimensionierte, in die Wand des Laser-Anregungsraumes
integriert eingebaute Kathode sollte etwa 5 mm in den Laser-
Anregungsraum hineinragen, so daß der Verlauf der Wand nur
durch eine leichte Wölbung unterbrochen wird.

Eine zusätzliche Verbesserung des Strömungsverlaufes im kathodennahen Bereich kann dadurch erzielt werden, daß auf dem anströmseitigen Bereich des Schlitzes, in den die Kathode eingesetzt
ist, ein über die Wandebene des Anregungsraumes vorstehender,
in Richtung der Drehachse der Kathode sich erstreckender und zu
deren Oberfläche hin auslaufender Anströmkörper angeordnet ist.

Weitere Vorteile und Merkmale der Erfindung ergeben sich
aus der nachfolgenden Beschreibung eines Ausführungsbeispiels
anhand der Zeichnung. In der Zeichnung zeigt

Figur 1 eine prinzipielle Darstellung einer erfindungsgemäßen
    Laseranordnung im Bereich der Elektroden,

0175048

- 5 -

Figur 2 einen Schnitt entlang der Schnittlinie II - II in

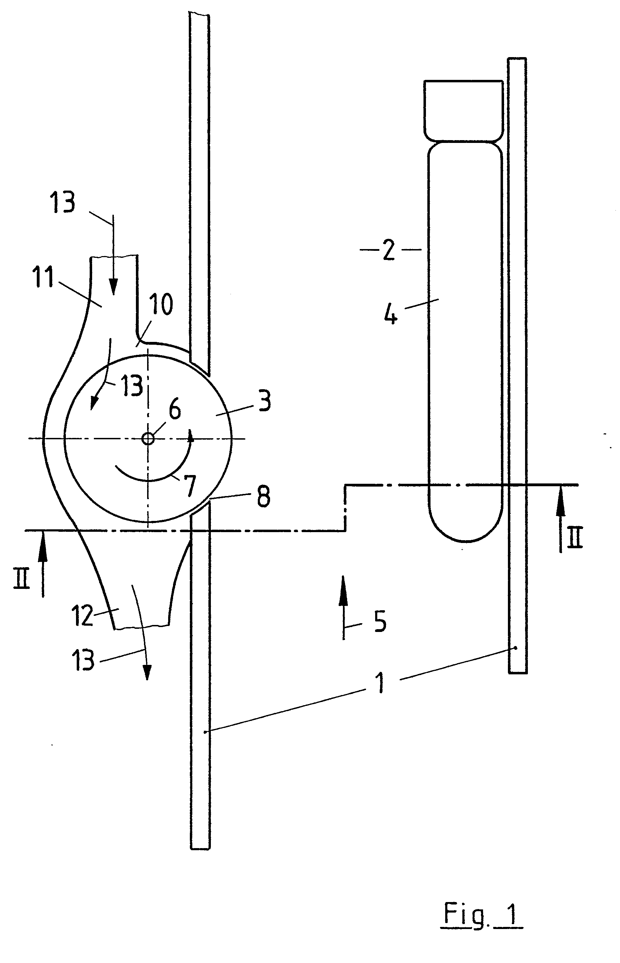

Figur 1 und

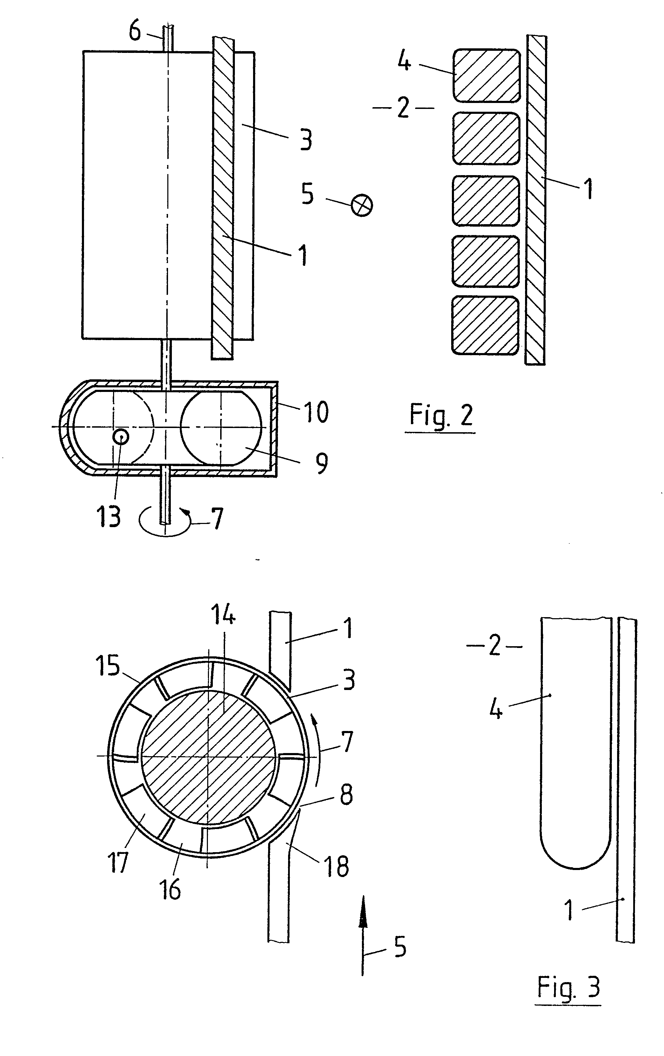

Figur 3 eine Kathodenanordnung, die gegenüber dem Ausführungsbeispiel nach Figur 1 und Figur 2 eine abgewandelte
Antriebseinrichtung aufweist.

Die in Fig. 1 ausschnittsweise dargestellte Laseranordnung
weist einen durch seitliche Wände 1 begrenzten Anregungsraum
2 auf; die Gasentladung brennt zwischen einer Kathode 3 und
einer Anode 4. Die Anode 4 hat hierbei eine Erstreckung in
Strömungsrichtung des Lasergases, durch den Pfeil 5 angedeutet,
von annähernd 10 cm. Bei dieser Anordnung stehen das elektrische
Feld der Gasentladung und die Strömungsrichtung 5 aufeinander
senkrecht, wobei sich die optische Achse des Laserresonators
in einem rechten Winkel zum elektrischen Feld und zur Gasströmung erstreckt.

Die Kathode 3 ist um eine Drehachse 6 in Richtung des Pfeiles 7
drehbar gelagert, und zwar so, daß sie durch einen Schlitz 8
in der seitlichen Wand 1 in den Anregungsraum 2 geringfügig
hineinragt. Die Oberfläche der Kathode, die über die seitliche
Wand 1 in den Anregungsraum 2 vorsteht, bewegt sich folglich
in Strömungsrichtung 5 des Anregungsgases. Bevorzugt wird
die zylinderförmige Kathode 3 mit einer solchen Geschwindigkeit
angetrieben, daß die Tangentialgeschwindigkeit an ihrer Oberfläche der Geschwindigkeit der Gasströmung im Anregungsraum
2 angenähert ist, d. h. die Differenzgeschwindigkeit zwischen
der Tangentialgeschwindigkeit und der Geschwindigkeit der
Gasströmung annähernd Null ist. Durch diese Maßnahme wird
eine Ablösung der Strömungsschicht an der Oberfläche der
Kathode 3 verhindert.

Wie aus Figur 2 ersichtlich ist, ist auf die Drehachse 6
ein Schaufelrad 9, das von einem Gehäuse 10 umgeben ist,
aufgesetzt und mit dieser fest verbunden. Im Schaufelrad 9 wird,

- 6 -

um die Kathode 3 umlaufend anzutreiben, ein Strömungsmedium über einen Gehäuseeinlaß 11 und einen Gehäuseauslaß 12 entsprechend den Pfeilen 13, die den Strömungsverlauf schematisch angeben, zugeführt (siehe Figur 1). Als Strömungsmedium kann beispielsweise das Lasergas, bevor es in den Anregungsraum 2 eingeleitet wird, dienen oder aber ein Kühlmedium. Die Kathode 3 kann aber auch direkt mit einer Einrichtung zum Bewegen des Lasergases oder des Kühlmediums, beispielsweise einem Gebläse, gekoppelt sein, so daß ein gesonderter Antrieb nicht erforderlich ist.

Die in Figur 3 gezeigte Kathode ist gegenüber dem Ausführungsbeispiel nach den Figuren 1 und 2 dahingehend abgewandelt, daß die Kathode zweiteilig aus einem inneren Zylinder 14 und einem äußeren Zylindermantel 15 aufgebaut ist. Der Durchmesser des Zylinders 14 und der Innendurchmesser des dünnwandigen Zylindermantels 15 sind so gewählt, daß zwischen diesen beiden Bauteilen ein Ringspalt 16 gebildet wird. An der Innenfläche des Zylindermantels 15 sind mehrere Anströmflächen 17, in der Darstellung nach Figur 3 von oben in die Bildebene hinein schräg entgegen dem Uhrzeigersinn verlaufend, angeordnet. Während der innere Zylinder 14 feststeht, ist der äußere Zylindermantel 15, in Figur 3 nicht näher dargestellt, drehbar gelagert. Der äußere Zylindermantel 15 wird in Richtung des Pfeiles 7 angetrieben, indem in den Ringspalt 16 ein Strömungsmedium, bevorzugt ein Kühlmedium, eingeleitet wird, und zwar in der Darstellung nach Figur 3 von der Richtung des Betrachters aus in die Zeichenebene hinein. Diese Ausführungsform hat den Vorteil, daß hier nur der äußere Zylindermantel 15 und damit nur eine geringe Masse in Bewegung versetzt werden muß und gleichzeitig durch das durch den Ringspalt 16 hindurchgeleitete Kühlmedium die Kathode 3 gekühlt wird. Selbstverständlich kann der äußere Zylindermantel 15 auch durch einen gesonderten Antrieb bewegt werden oder aber auch über eine ohnehin im Lasersystem vorhandene Einrichtung, wie etwa ein Gebläse.

In Figur 3 ist ein zusätzlicher Anströmkörper 18 gezeigt, der auf den den Schlitz 8 anströmseitig begrenzenden Wandbereich 1 aufgesetzt ist und der zur Oberfläche des Zylindermantels 15 hin ausläuft. Hierdurch wird die Anströmung der zylinderförmigen Kathode verbessert. Selbstverständlich kann ein derartiger Anströmkörper 18 auch in Verbindung mit der in den Figuren 1 und 2 gezeigten Kathode eingesetzt werden.

Hanau, den 18. Sept. 1984
ZPL-eG/W

W. C. Heraeus GmbH, Hanau

Patent- und Gebrauchsmusterhilfsanmeldung

"Gaslaser, insbesondere $CO_2$-Laser"

_ 1 ~

## Patentansprüche

1. Gaslaser, insbesondere $CO_2$-Laser, mit einem Entladungsraum, der von einem laseraktiven Gas mit hoher Geschwindigkeit durchströmt wird, wobei die zur Anregung dienende Gasentladung als Gleichfeldentladung zwischen einer in Strömungsrichtung ausgedehnten Anode und einer der Anode gegenüberliegenden Kathode brennt, dadurch gekennzeichnet, daß die Kathode (3) eine umlaufende Oberfläche besitzt, wobei der der Anode (4) zugekehrte Teil dieser Oberfläche eine Bewegungskomponente in Strömungsrichtung (5) des laseraktiven Gases aufweist.

2. Gaslaser nach Anspruch 1, dadurch gekennzeichnet, daß die Geschwindigkeit, mit der die Oberfläche der Kathode (3) umläuft, der Geschwindigkeit der Gasströmung im Kathodenbereich angenähert ist.

3. Gaslaser nach Anspruch 1 oder 2, dadurch gekennzeichnet, daß die Oberflächengeschwindigkeit der Kathode (3) gleich oder größer als die Geschwindigkeit der Gasströmung ist.

- 2 -

4. Gaslaser nach einem der Ansprüche 1 bis 3, dadurch gekennzeichnet, daß die umlaufende Oberfläche der Kathode (3)
mit einer Einrichtung, die gleichzeitig zur Erzeugung
der Gasströmung dient, angetrieben wird.

5. Gaslaser nach einem der Ansprüche 1 bis 3, dadurch gekennzeichnet, daß die umlaufende Oberfläche der Kathode (3)
über das durch den Anregungsraum (2) zu leitende Gas,
beispielsweise das Lasergas oder ein Puffergas, angetrieben
wird.

6. Gaslaser nach einem der Ansprüche 1 bis 5, dadurch gekennzeichnet, daß die umlaufende Oberfläche die Oberfläche
einer rotationssymmetrisch ausgebildeten Kathode (3) ist,
die um eine Achse (6) senkrecht zur Strömungsrichtung
(5) und senkrecht zur Entladung drehbar gelagert ist.

7. Gaslaser nach Anspruch 6, dadurch gekennzeichnet, daß
die rotationssymmetrisch ausgebildete Kathode (3) ein
Zylinder ist.

8. Gaslaser nach Anspruch 5 oder 7, dadurch gekennzeichnet,
daß an der verlängert ausgebildeten Drehachse (6) der
zylinderförmigen Kathode (3) ein schaufelförmiges Antriebsrad (9) angeordnet ist, das über das durch den Anregungsraum (2) zu leitende Gas angetrieben wird.

9. Gaslaser nach einem der Ansprüche 1 bis 3, dadurch gekennzeichnet, daß die Kathode (3) als Hohlkörper ausgebildet
ist, durch den ein Kühlmedium strömt.

10. Gaslaser nach Anspruch 9, dadurch gekennzeichnet, daß
mittels des Kühlmediums die umlaufende Oberfläche der
Kathode (3) angetrieben wird.

11. Gaslaser nach Anspruch 5 oder 10, dadurch gekennzeichnet, daß die Kathode (3) einen äußeren, drehbar gelagerten, die umlaufende Kathoden-Oberfläche bildenden Zylindermantel (15) und einen inneren, feststehenden Zylinder (14) aufweist, jeweils mit einem solchen Durchmesser, daß zwischen Zylindermantel (15) und Zylinder (14) ein Ringspalt (16) gebildet wird, durch den das Anregungs-Gas oder das Kühlmedium zum Antrieb des Zylindermantels geleitet wird.

12. Gaslaser nach Anspruch 11, dadurch gekennzeichnet, daß an der dem Ringspalt (16) zugewandten Innenseite des Zylindermantels (15) Anströmflächen (17) angeordnet sind.

13. Gaslaser nach einem der Ansprüche 1 bis 12, dadurch gekennzeichnet, daß die Kathode (3) in einen Schlitz (8) der den Laser-Anregungsraum (2) begrenzenden Wand (1) derart angeordnet ist, daß sie geringfügig über die Wand (1) vorsteht.

14. Gaslaser nach einem der Ansprüche 1 bis 13, dadurch gekennzeichnet, daß die Kathode (3) einen äußeren Durchmesser von etwa 30 bis 60 mm aufweist.

15. Gaslaser nach Anspruch 14, dadurch gekennzeichnet, daß der Kathoden-Durchmesser etwa 50 mm beträgt.

16. Gaslaser nach Anspruch 13 und 15, dadurch gekennzeichnet, daß die Kathode (3) etwa 5 mm in den Laser-Anregungsraum (2) hineinragt.

17. Gaslaser nach Anspruch 13, dadurch gekennzeichnet, daß auf dem anströmseitigen Bereich des Schlitzes (8) ein über die Wandebene des Anregungsraumes (2) vorstehender, in Richtung der Drehachse (6) der Kathode (3) sich erstreckender und zu deren Oberfläche hin auslaufender Anströmkörper (18) angeordnet ist.

Fig. 1

Fig. 2

Fig. 3